# EUROPEAN PATENT SPECIFICATION

(11) **EP 1 489 704 B1**
(45) Date of publication and mention of the grant of the patent: **10.10.2007**
(21) Application number: 04022922.1
(22) Date of filing: 22.08.2000
(51) Int. Cl.: H01R 24/14, H01R 13/629

(54) **Universal quick connector apparatus for an LCD monitor**
Universelle Schnellbefestigungsvorrichtung für einen LCD Monitor
Appareil universel de connexion rapide pour écran LCD

(30) Priority: 23.08.1999 US 150307 P
(43) Date of publication of application: 22.12.2004
(62) Divisional of application: 00951779.8
(73) Proprietor: Moscovitch, Jerry, Toronto, Ontario M2L 2L6 (CA)
(72) Inventor: Moscovitch, Jerry, Toronto, Ontario M2L 2L6 (CA)
(74) Representative: Roberts, Mark Peter

(56) References cited:
- US-A- 3 348 116
- US-A- 5 009 384
- US-A- 5 687 939

## Description

This invention relates to LCD systems, and more particularly to an LCD display system which incorporates a quick connect/release connector apparatus for enabling an LCD monitor to be electrically and mechanically coupled, simultaneously, to a support member, through a quick and easy sliding movement of the LCD monitor.

LCD monitors have become increasingly popular in a wide variety of applications. Such monitors are lightweight, when compared to CRT type monitors, and therefore much more easily handled by an individual. LCD monitors are often used in applications where two or more monitors are often required, such as in the financial industry, where multiple graphs of information need to be viewed in real time. Multiple monitor applications are also found in use in engineering applications, manufacturing applications, and a wide variety of other applications where a large amount of information needs to be displayed simultaneously for the user(s).

Often such multiple LCD monitor systems are supported on a common arm. The arm is typically held above the worksurface, such as a desk or table, by a vertical column attached to a base. Frequently the need arises to remove one LCD monitor and use it with a separate workstation area. Since LCD monitors are still relatively expensive as compared with CRT monitors, and further attached to a display stand to form a single assembly, it is not possible to easily remove one LCD monitor from a display system and connect it to another workstation where the need for the LCD monitor is more acute. Thus, it is either not possible or highly impractical to disconnect LCD monitors from various work areas and reconnect them at workstations where a particularly acute need for the additional monitor has arisen. The operation of electrically disconnecting the video cable from the LCD monitor, and then mechanically uncoupling the LCD from its support or base (if such was even provided for by the manufacturer of the display system), and then reconnecting the LCD monitor both electrically and mechanically to a different LCD display system and associated computer, would be extremely time consuming and cumbersome.

US 5,009,384 discloses a CRT screen having guide tracks on its top surface that are adapted to receive a support shoe so that the screen may be suspended from a ceiling. The tracks and shoe provide both mechanical and electrical connection.

The lack of a present day means to conveniently electrically and mechanically mount an LCD monitor, removably, on some form of a cooperating docking station thus significantly limits the utility of the monitor by preventing it from being easily removed from use in one application and physically taken by the user to be used in another application. For example, the lack of such a coupling/connector system prevents an LCD monitor used with a computer at a user's workplace from being easily uncoupled and taken home for use with a home computer. Providing a connector system which would allow quick and easy electrical and mechanically coupling and uncoupling of the LCD monitor would allow it to be easily taken by the user and used wherever it may be needed.

Accordingly, it is a principal object of the present invention to provide a universal connector apparatus which enables an electrical and mechanical connection to be made, generally simultaneously, between an LCD monitor and a docking station of a supporting member, thus allowing the LCD monitor to be used.

It is a further object of the present invention to provide a connector apparatus for an LCD monitor which is relatively inexpensive to produce, lightweight, compact, and which does not require any special tools such as screwdrivers, pliers, etc., to enable an LCD monitor to be uncoupled, both electrically and mechanically, from a support member.

It is still a further object of the present invention to provide a universal connector apparatus which enables two or more LCD monitors, each having one portion of the connector apparatus, to be electrically and mechanically coupled, and interchanged as needed, to one or more second portions of the connector apparatus. In this manner any number of LCD monitors could be coupled or interchanged as needed to a support member or docking station without any modification to the LCD monitor or the support member/docking station.

The invention is defined in the claims. The electrical connector of the display screen is preferably a male connector. The support member comprises preferably a housing in the form of a cup which has a mating electrical connector, and preferably a female connector, fixedly mounted therein.

Preferably, the housing of the first component further includes an integrally formed protrusion which, in one embodiment, comprises a wedge shaped protrusion. Preferably, the housing of the second component comprises a recess which is shaped complementarily to the projection on the first component of the connector assembly. Accordingly, when a wedge shaped protrusion is employed, then a similarly sized wedge shaped recess will be employed in the housing of the second component.

The electrical connector component mounted within the housing of the second component is preferably mounted at the bottom of the recess. When the projection of the first component is slidably inserted into the recess of the second component, both a mechanical and an electrical connection are made almost simultaneously. If a wedge shaped projection and recess is employed, the wedge shape provides the added benefit of automatically aligning the male and female electrical connectors as they are slid into mating engagement with one another.

It will be appreciated that the two piece connector apparatus described above can be used in a wide variety of applications, such as within vehicles, on wall mounted monitor support arms, directly on walls, or wherever desired. The surface that the second component is attached to should have sufficient area and strength to allow the second component to be fixedly attached to it.

The various advantages of the present invention will become apparent to one skilled in the art by reading the following specification and by referencing the following drawings, in which:
Figure 1 is a perspective view of a portion of a rear area of an LCD monitor incorporating a preferred embodiment of a first component of the universal connector apparatus, and a portion of a support arm incorporating a preferred embodiment of a second component of the apparatus, with the two components about to be slidably engaged with one another;
Figure 2 is a side view of the LCD monitor of Figure 1 about to be slidably engaged with the support arm through the use of the two connector components;
Figure 3 is a side view of the LCD monitor and support arm of Figure 2 coupled together through the use of the connector apparatus;
Figure 4 is a bottom view of the LCD monitor and support arm of Figure 3 illustrating the slim-line profile of the coupled components;
Figure 5 is a perspective view of the second component of the connector apparatus;
Figure 6 is a side view of the second component coupled to a ball joint associated with a horizontal support arm of a display base;
Figure 7 is a perspective view of an alternative preferred embodiment of the first component of the connector apparatus;
Figure 8 is a perspective view of a mating second component for the first component shown in Figure 7;
Figure 9 is a bottom view of the first component shown in Figure 7;
Figure 10 is a perspective view of the first component of Figure 7 attached to a rear area of a housing of an LCD monitor, and ready to be slidably coupled to the second component of Figure 8, which is in turn coupled to a support arm;
Figure 11 is a side view of the system shown in Figure 10;
Figure 12 is a perspective view of two LCD monitors being supported on a support member, where at least the right LCD is coupled to the support arm through the use of one of the embodiments of the connector apparatus of the present invention;
Figure 13 shows the display system of Figure 11 with the right monitor uncoupled from the support arm;
Figure 14 shows an alternative application of the connector apparatus of the present invention being used to releasably coupled an LCD monitor to the rear of a vehicle seat;
Figure 15 shows another alternative application where an LCD monitor is releasably coupled to an inside of a vehicle door;
Figure 16 is a perspective view of an LCD monitor about to be supported on a vertical wall through the use of the connector apparatus of the present invention; and
Figure 17 is a perspective view of an LCD monitor about to be releasably coupled to a pivoting display arm attached to a wall surface.

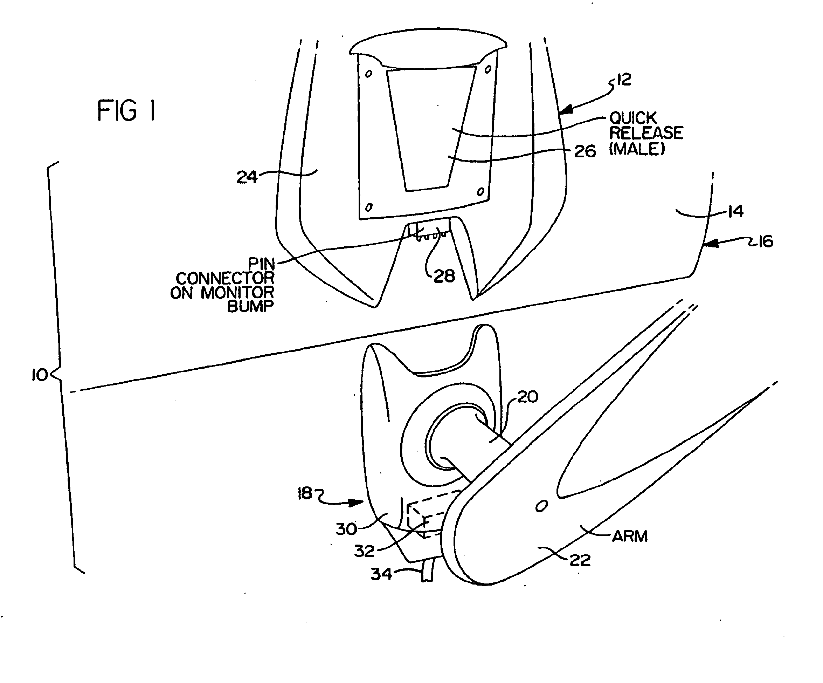

Referring to Figure 1, there is shown a connector apparatus 10 in accordance with a preferred embodiment of the present invention. The connector apparatus 10 includes a first component 12 which is fixedly attached to a housing 14 of a liquid crystal display (LCD) monitor 16. The first connector 12 is preferably attached to a rear or bottom surface of the housing 14. A second connector component 18 forms a docking station and is attached, in this embodiment, to a ball joint 20, which is in turn attached to a support arm 22. The ball joint 20 allows the second component 18 to be moved as needed relative to the support arm 22 and, therefore, to allow the LCD monitor 16 to be adjusted for a optimum viewing angle.

With further reference to Figure 1, the first component 12 includes a housing 24 having a wedge shaped protrusion 26. Below the wedge shaped protrusion is an electrical connector 28 which, in this embodiment, is illustrated as a male connector. The second component 18 includes a cup shaped housing 30 within which is disposed a second electrical connector 32. A video cable 34 is electrically coupled to the electrical connector 32. In this embodiment, the electrical connector 32 comprises a female connector. It will be appreciated, however, that the electrical connector 28 of the first component 12 could be a female component and the connector 32 could be a male component.

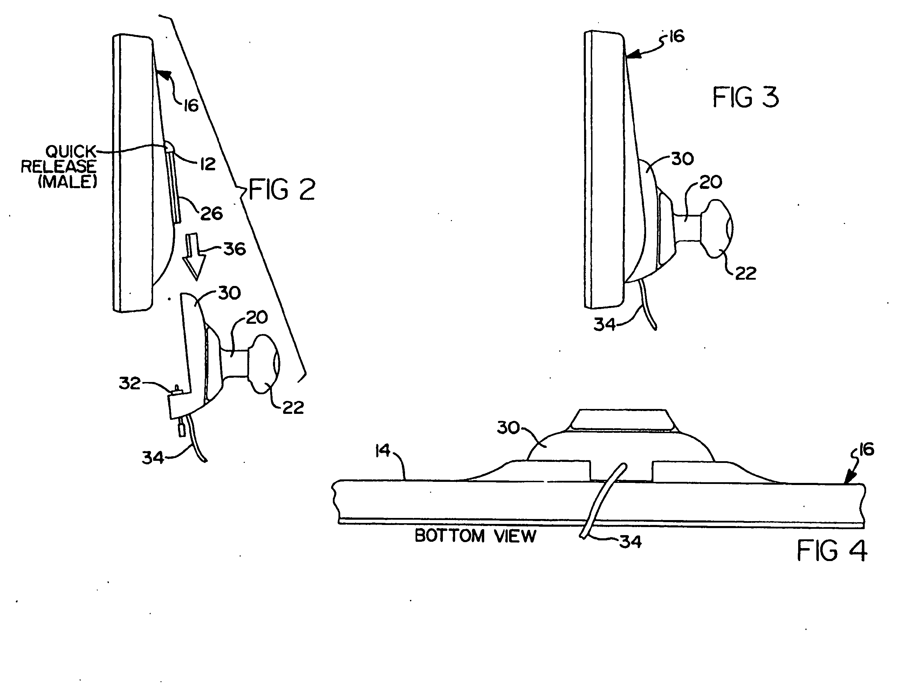

Referring to Figure 2, the LCD monitor 16 is shown about to be attached to the second component 18 of the connector apparatus 10. Arrow 36 indicates that the LCD monitor 16 is moved slidably down onto the cup shaped housing 30 to attach the first component 12 to the second component 18 of the connector apparatus 10. The inter coupled components 12 and 18 are illustrated in Figure 3. When attached as shown in Figure 3, the first component 12 is disposed generally within the cup shaped housing 18 and electrically and mechanically coupled to the second component 18. Second component 18 thus not only allows an electrical connection to be made with the video cable 34, but also has sufficient strength to support the entire LCD monitor 16. The attached components are also shown in Figure 4 from a bottom view. Figure 4 illustrates the generally blended, low profile attachment of the first and second components 12 and 18, respectively.

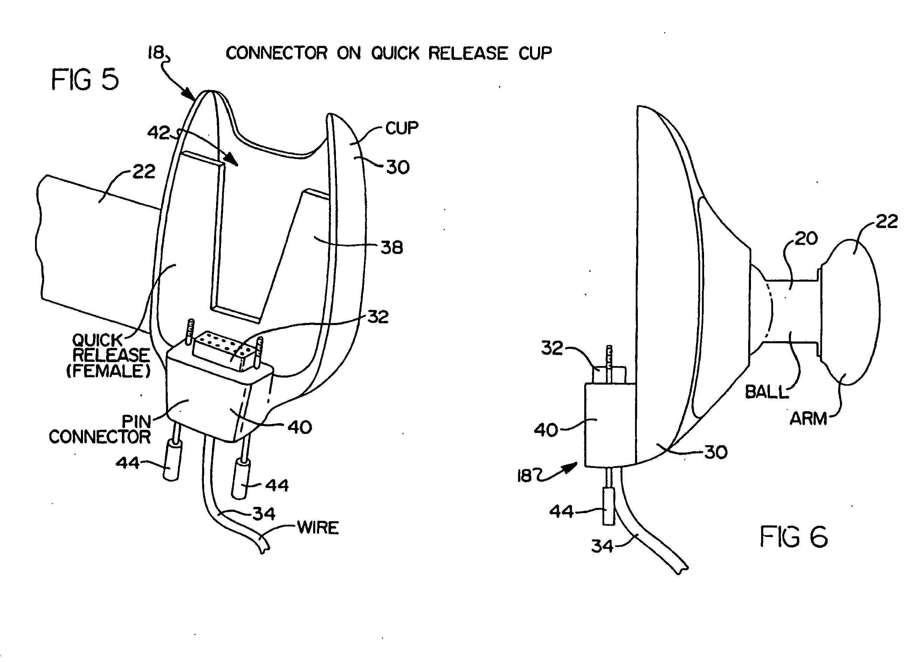

Referring now to Figure 5, the second component 18 can be seen in greater detail. The cup shaped housing 30 has a wedge component 38 adjacent to a lower housing portion 40 within which the female electrical connector 32 is disposed. A recessed area 42 behind the wedge component 38 provides a small amount of clearance for a portion of the wedge member 26 when member 26 is inserted into the second component 18. The interengagement of the wedge shaped portion 26 and the wedge shaped member 38 serves to automatically align the male pins of electrical connector 28 (Figure 1) with the electrical connector 32 when the first component 12 is slidably attached to the second component 18. Threaded screws 44 can then be used to even more positively secure the two electrical connectors 28 and 32 to one another. The generally low profile arrangement of the second connector 18 is shown further in Figure 6.

The connector apparatus 10 of the present invention thus enables the LCD monitor 16 to be slidably coupled to a support arm 22 such that the entire LCD monitor 16 can be supported securely. The intercoupling of the first and second components 12 and 18, respectively, does not require time consuming disassembly or any special tools. When it is desired to remove the monitor 16 from the cup shaped housing 30 of the second component 18, the user merely lifts the LCD monitor 16 upwardly and the entire unit will slidably disengage from the electrical connector 32 (provided threaded screws 44 are not engaged with connector 28). The wedge shaped components 26 and 38 further ensure that the electrical connectors 28 and 32 will be perfectly aligned every time the LCD monitor 16 is secured to the second component 18.

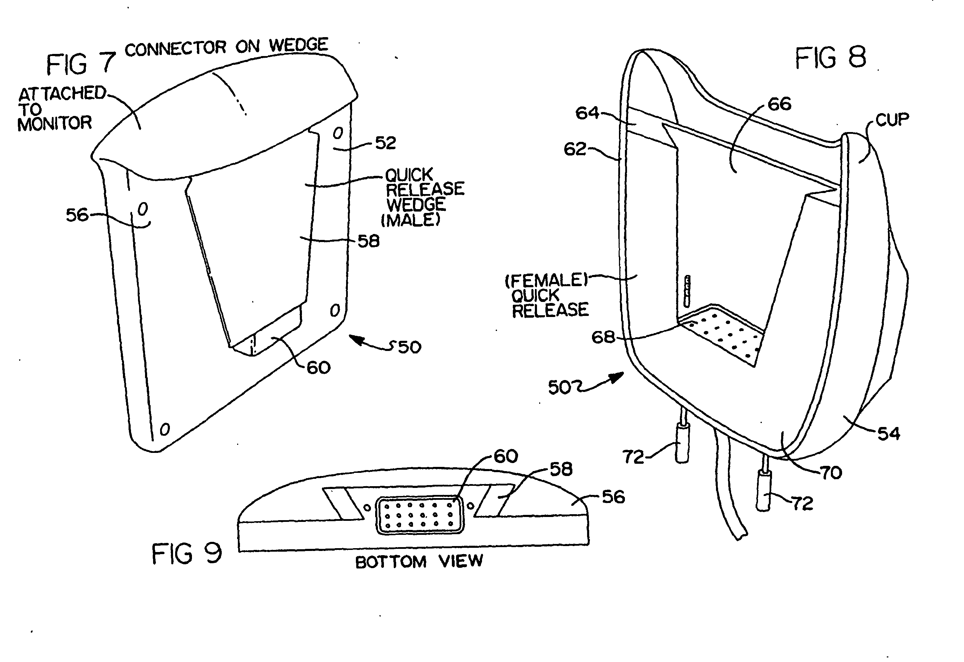

Referring now to Figures 7 and 8, a connector apparatus 50 in accordance with an alternative preferred embodiment of the present invention is shown. The connector apparatus 50 generally comprises a first component 52 and a second component 54. The first component 52 is intended to be secured fixedly to a housing portion of an LCD monitor, just as shown in Figure 1. The second component 54 is similarly intended to be fixedly secured to any other form of support member which is used to support the LCD monitor attached to the first component 52. The first component 52 similarly includes a housing 56 with a wedge shaped protrusion 58 projecting therefrom. An electrical connector 60, in this embodiment a male connector, is secured to the housing 56 at the bottom of the wedge shaped protrusion 58. The orientation of the electrical connector 60 is shown in Figure 9.

Referring to Figure 8, the second component 54 is shown in greater detail. The second component 54 includes a cup shaped housing 62 having a component 64 forming a wedge shaped recess 66. An electrical connector 68 is disposed within a lower portion 70 of the wedge shaped member 64. Threaded screws 72 may be included or used with the connector 68 to help secure the connector 68 to the connector 60.

Securing of the first component 52 to the second component 54 is otherwise identical to the connector apparatus 10. The LCD monitor attached to the first component 52 is positioned adjacent the second component 54 and then lowered such that the wedge shaped protrusion 58 slidably engages within the wedge shaped recess 66. The wedge shaped recess 66 serves to automatically center and align the connector 60 with the connector 68 as the first component 52 fully slidably engages the second component 54.

With both of the embodiments 10 and 50 of the present invention, it will be appreciated that electrical connectors 28 and 60, respectively, are each electrically coupled to the display element of the LCD monitor to which they are secured. Thus, one side of each of connectors 28 and 60 will have electrical conductors in communication with the display element. Each of the first components 12 and 52 may be attached to a housing of an LCD monitor by threaded screws or any other means which securely affixes the body of the component 12 or 52 to a portion of the housing of the LCD monitor. Alternatively, it may be advantageous to form the first components 12 or 52 with the housing of the LCD monitor.

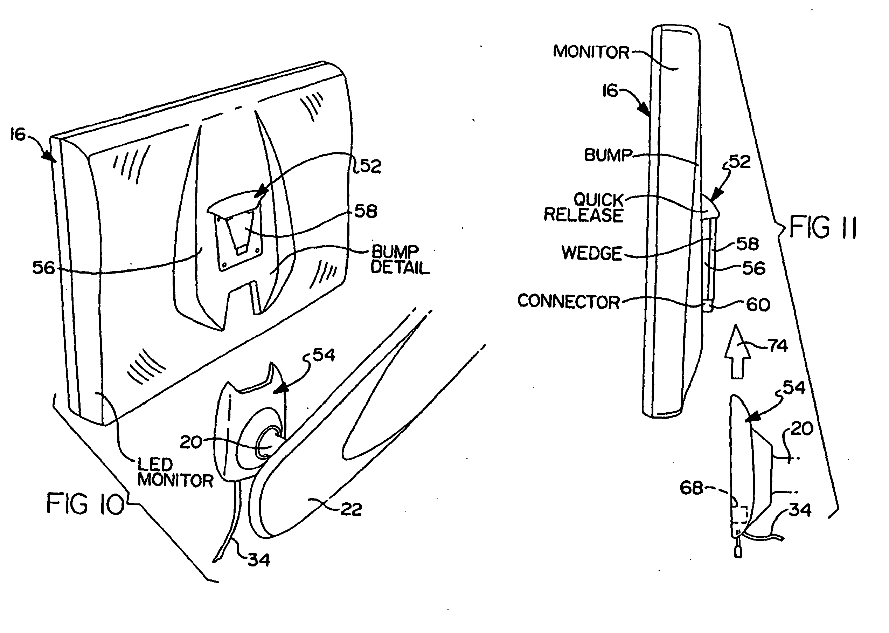

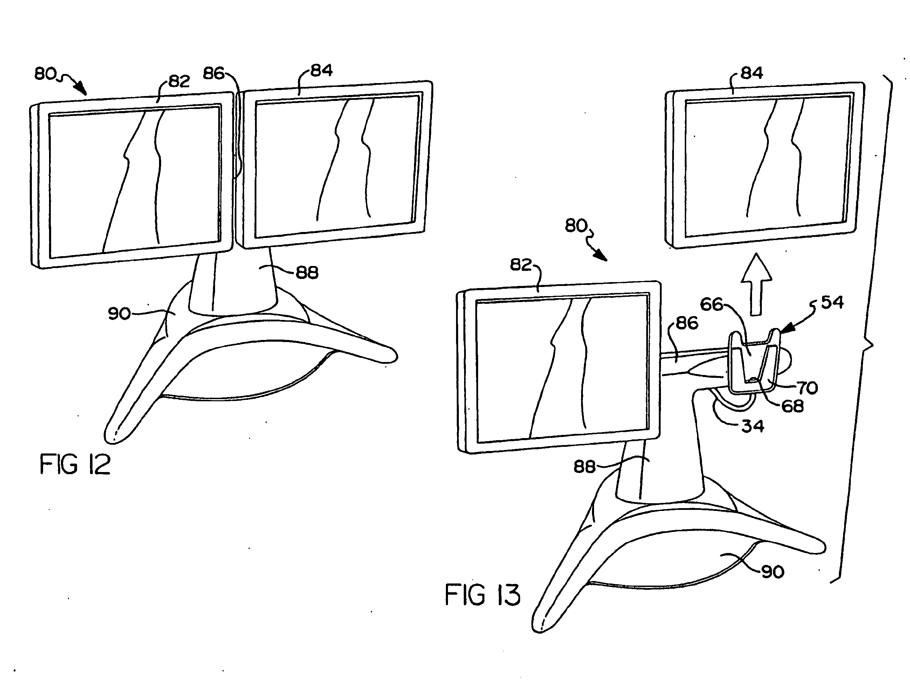

Referring now to Figures 10 and 11, the sliding attachment of the first component 52 with the second component can be seen. The first component 52 is shown attached to the LCD monitor 16. Arrow 74 in Figure 11 indicates the direction of movement of the second component 54 relative to the first component 52 in order to effect attachment of the two components together.

Referring now to Figure 12, a dual screen LCD monitor system 80 is shown incorporating LCD monitors 82 and 84. LCD monitors 82 and 84 are supported on a generally horizontally disposed arm 86, which is in turn supported on a generally vertically disposed column 88. The column 88 is in turn supported on a base 90. In Figure 13, it can be seen how LCD monitor 84 can be lifted off of the second component 54 by lifting upwardly on the LCD monitor 84.

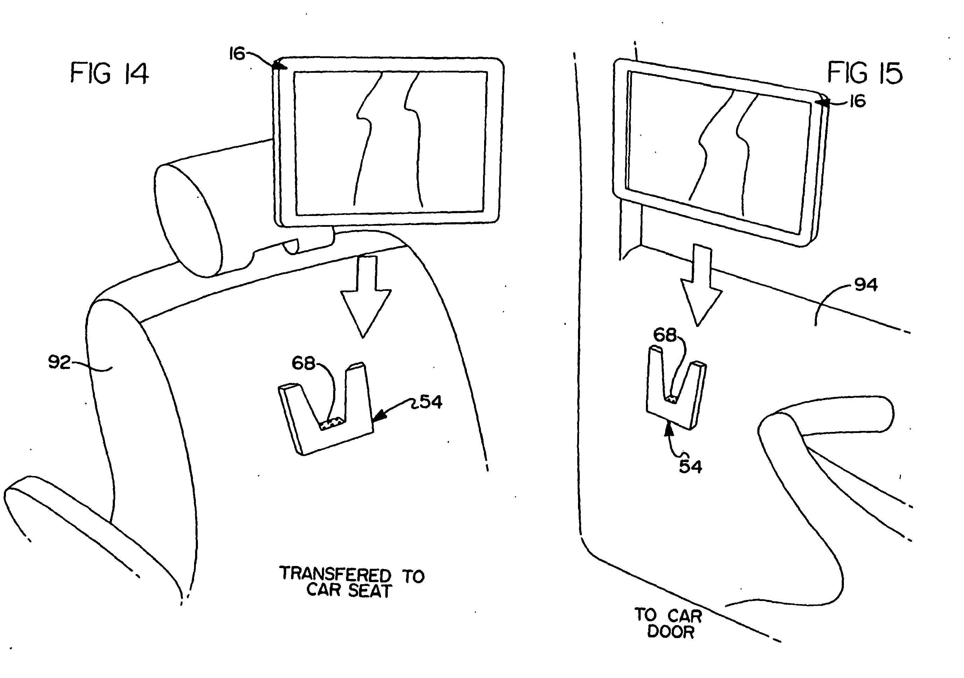

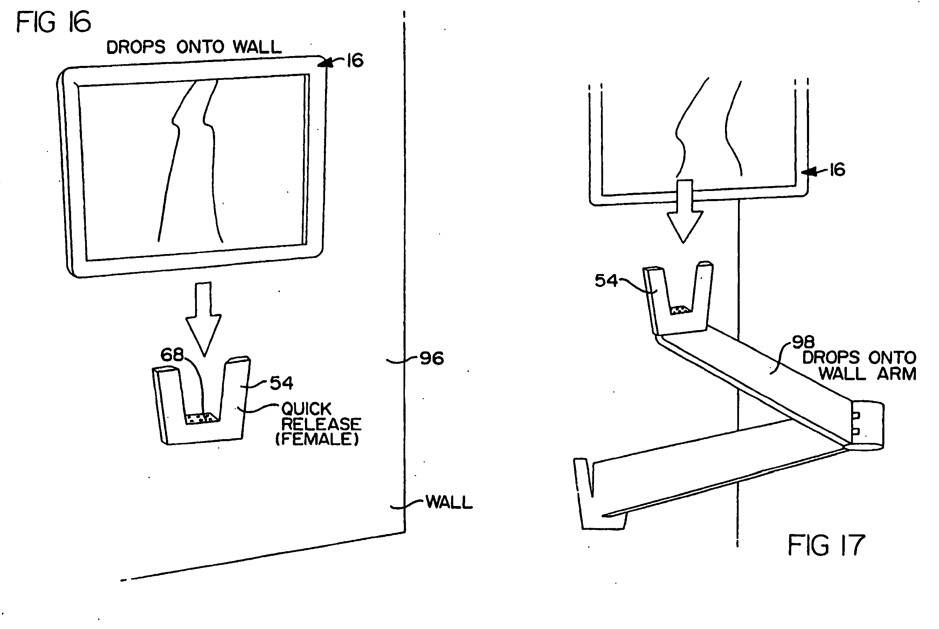

In Figure 14, it can be seen how the second component 54 can be modified to omit the cup shaped housing 62 and could be attached to a seat 92 within a vehicle to allow LCD monitor 16 to be releasably detached from the second component 54 and removed from the vehicle. Figure 15 similarly shows the second component 54 attached to an inside of a vehicle door 94 which allows the LCD monitor 16 to be removed from its location on a vehicle door and taken from the vehicle.

Referring now to Figure 16, the second component 54 is shown attached to a wall 96. The LCD monitor 16 can thus be supported on the wall 96 simply by dropping the monitor slidably onto the second component 54 such that the first and second components 52 and 54, respectively, become slidably engaged. In Figure 17, the second component 54 is shown secured to a pivotal support arm 98, which is also attached to the wall 96. The LCD monitor 16 can be attached to the second component 54 as described hereinbefore.

It will be appreciated then that the preferred embodiments of the present invention allow an LCD monitor to be quickly and easily coupled to and uncoupled from a support member without the need for complicated disassembly procedures. The wedge shaped portions of each of the first and second components of the present invention further enable the electrical connectors of the first and second components to be aligned precisely as the first component attached to the LCD monitor is slidably engaged with the second component. Thus, there is little or no chance that the user will damage the male pins of the male electrical connector during reattachment of the monitor to the second component.

It will further be appreciated that a principal advantage of the connector apparatus 10 or 50 of the present invention is that it allows one LCD monitor to be used at a variety of locations where the second component of the apparatus is in use. This provides much greater versatility for an LCD display monitor by allowing it to be used in a variety of environments where the need may arise.

Those skilled in the art can now appreciate from the foregoing description that the broad teachings of the present invention can be implemented in a variety of forms. Therefore, while this invention has been described in connection with particular examples thereof, the true scope of the invention is limited to the following claims.

## Claims

1. A system comprising a display screen (16,82,84) and a connector apparatus for allowing quick electrical and mechanical coupling and decoupling of said display screen (16,82,84) to a support member (22,28,98), said system comprising:
a first component (12,18,52,54) mounted at a surface of said display screen, said first component having a first mating member (26,30,38,58,62,66) and a first electrical connector (28,32,60,68);
a second component (12,18,52,54) mountable to said support member, said second component having a second mating member (26,30,38,58,62,66) and a second electrical connector (28,32,60,68), wherein said first and second mating members have complementary shapes to allow the first mating member to engage onto the second mating member so that the support member physically supports said display screen, while said first electrical connector concurrently engages with said second electrical connector to also cause electrical coupling of the two electrical connectors, **characterised in that** the first component is mounted at the rear or bottom surface of the display screen and **in that** the first mating member is allowed to be lowered onto the second making member.

2. The system of claim 1, wherein the first mating member includes a protrusion (26,58).

3. The system of claim 2, wherein the protrusion is wedge-shaped.

4. The system of claim 2 or 3, wherein the protrusion is separated from the first electrical connector.

5. The system of any one of the preceding claims, wherein the first component and the second component are devoid of elements for receiving any of the four edges of the display.

6. The system of any one of the preceding claims, wherein the second component includes a cup shaped housing (30 or 62) having a housing component (38 or 64) forming a recess (42 or 66) for receiving the first mating member of the first component, and for necessitating, during removal of the first mating member from the recess, an upward lifting of the first mating member to remove the first mating member from the recess.

7. The system of any one of the preceding claims, wherein after engagement of the first mating member and the second mating member, substantially all of the weight of the display screen is supported by the second mating member.

8. The system of any one of claims 1 to 4, wherein the first and second electrical connectors mechanically engage one another when the first and second mounting components are mechanically engaged.

9. The system of any one of the preceding claims, wherein neither the first mating member nor the second mating member are visible to a user facing the front of the display screen.

10. The system of any one of the preceding claims, wherein the first component is disposed on the rear surface of the display screen

11. The system of claim 10, wherein the first component includes a protrusion that is inserted into a recess (42 or 66) of the second mating member.

12. The system of any one of the preceding claims, further comprising the support member, wherein the support member includes one of a portion of a vehicle, a rear portion of a seat (92) and a wall (96).

## Patentansprüche

1. System, aufweisend eine Anzeigeeinrichtung (16, 82, 84) und eine Verbindungsvorrichtung, um ein schnelles elektrisches und mechanisches Koppeln und Entkoppeln der Anzeigeeinrichtung (16, 82, 84) mit einem Stützelement (22, 28, 98) zu ermöglichen, wobei das System aufweist:
ein erstes Teil (12, 18, 52, 54), das an einer Oberfläche der Anzeigeeinrichtung montiert ist, wobei das erste Teil ein erstes Gegenelement (26, 30, 38, 58, 62, 66) und einen ersten elektrischen Verbinder (28, 32, 60, 68) hat;
ein zweites Teil (12, 18, 52, 54), das an dem Stützelement montierbar ist, wobei das zweite Teil ein zweites Gegenelement (26, 30, 38, 58, 62, 66) und einen zweiten elektrischen Verbinder (28, 32, 60, 68) hat, wobei das erste und das zweite Gegenelement komplementäre Formen haben, um es dem ersten Gegenelement zu ermöglichen, an das zweite Gegenelement zu verbinden, so dass das Stützelement die Anzeigeeinrichtung physikalisch stützt, während der erste elektrische Verbinder gleichzeitig mit dem zweiten elektrischen Verbinder verbindet, um auch eine elektrische Kopplung der zwei elektrischen Verbinder zu bewirken, **dadurch gekennzeichnet, dass** das erste Teil an der Rückseite oder unteren Oberfläche der Anzeigeeinrichtung montiert ist und dass es dem ersten Gegenelement ermöglicht ist, an dem zweiten Gegenelement abgesenkt zu werden.

2. System nach Anspruch 1, wobei das erste Gegenelement einen Vorsprung (26, 58,) einschließt.

3. System nach Anspruch 2, wobei der Vorsprung keilförmig ist.

4. System nach Anspruch 2 oder 3, wobei der Vorsprung von dem ersten elektrischen Verbinder getrennt ist.

5. System nach einem der vorhergehenden Ansprüche, wobei das erste Teil und das zweite Teil frei von Elementen zum Aufnehmen von irgendeiner der vier Kanten der Anzeige sind.

6. System nach einem der vorhergehenden Ansprüche, wobei das zweite Teil ein tassenförmiges Gehäuse (30 oder 62) einschließt, welches ein Gehäuseteil (38 oder 64) hat, das eine Ausnehmung (42 oder 66) zum Aufnehmen des ersten Gegenelements des ersten Teils bildet, und zum erforderlich Machen, während das erste Gegenelement aus der Ausnehmung entfernt wird, eines Anhebens des ersten Gegenelements nach oben, um das erste Gegenelement aus der Ausnehmung zu entfernen.

7. System nach einem der vorhergehenden Ansprüche, wobei nach Verbinden des ersten Gegenelements und des zweiten Gegenelements im Wesentlichen das gesamte Gewicht der Anzeigeeinrichtung durch das zweite Gegenelement gestützt wird.

8. System nach einem der Ansprüche 1 bis 4, wobei der erste und zweite elektrische Verbinder einander mechanisch verbinden, wenn das erste und zweite Montageteil mechanisch verbunden sind.

9. System nach einem der vorhergehenden Ansprüche, wobei weder das erste Gegenelement noch das zweite Gegenelement für einen Benutzer sichtbar sind, der die Vorderseite der Anzeigeeinrichtung betrachtet.

10. System nach einem der vorhergehenden Ansprüche, wobei das erste Teil an der rückseitigen Oberfläche der Anzeigeeinrichtung angeordnet ist.

11. System nach Anspruch 10, wobei das erste Teil einen Vorsprung einschließt, der in eine Ausnehmung (42 oder 66) des zweiten Gegenelements eingefügt ist.

12. System nach einem der vorhergehenden Ansprüche, weiterhin aufweisend das Stützelement, wobei das Stützelement eines des folgenden einschließt: ein Teil eines Fahrzeugs, ein rückwärtiges Teil eines Sitzes (92) und eine Wand (96).

## Revendications

1. Système comportant un écran d'affichage (16, 82, 84) et un appareil connecteur pour permettre un accouplement et un désaccouplement électrique et mécanique rapides dudit écran d'affichage (16, 82, 84) sur un élément de support (22, 28, 98), ledit système comportant :
un premier composant (12, 18, 52, 54) monté sur une surface dudit écran d'affichage, ledit premier composant ayant un premier élément de raccordement (26, 30, 38, 58, 62, 66) et un premier connecteur électrique (28, 32, 60, 68) ;
un second composant (12, 18, 52, 54) pouvant être monté sur ledit élément de support, ledit second composant ayant un second élément de raccordement (26, 30, 38, 58, 62, 66) et un second connecteur électrique (28, 32, 60, 68), dans lequel lesdits premier et second éléments de raccordement ont des formes complémentaires pour permettre au premier élément de raccordement de venir en prise sur le second élément de raccordement de sorte que l'élément de support supporte physiquement ledit écran d'affichage, alors que ledit premier connecteur électrique vient en prise conjointement avec ledit second connecteur électrique pour aussi provoquer un accouplement électrique des deux connecteurs électriques, **caractérisé en ce que** le premier composant est monté au niveau de la surface arrière ou de fond de l'écran d'affichage et **en ce que** le premier élément de raccordement peut être abaissé sur le second élément de raccordement.

2. Système selon la revendication 1, dans lequel le premier élément de raccordement comporte une saillie (26, 58).

3. Système selon la revendication 2, dans lequel la saillie a une forme de coin.

4. Système selon la revendication 2 ou 3, dans lequel la saillie est séparée du premier connecteur électrique.

5. Système selon l'une quelconque des revendications précédentes, dans lequel le premier composant et le second composant sont dépourvus d'élément pour recevoir l'un quelconque des quatre bords de l'affichage.

6. Système selon l'une quelconque des revendications précédentes, dans lequel le second composant inclut un boîtier en forme de coupelle (30 ou 62) ayant un composant de logement (38 ou 64) formant un évidement (42 ou 66) pour recevoir le premier élément de raccordement du premier composant, et nécessiter, pendant l'enlèvement du premier élément de raccordement de l'évidement, une levée vers le haut du premier élément de raccordement pour enlever le premier élément de raccordement de l'évidement.

7. Système selon l'une quelconque des revendications précédentes, dans lequel après la venue en prise du premier élément de raccordement et du second élément de raccordement, sensiblement la totalité du poids de l'écran d'affichage est supportée par le second élément de raccordement.

8. Système selon l'une quelconque des revendications 1 à 4, dans lequel les premier et second connecteurs électriques viennent en prise mécaniquement l'un avec l'autre lorsque les premier et second composants de montage sont mécaniquement en prise.

9. Système selon l'une quelconque des revendications précédentes, dans lequel ni le premier élément de raccordement ni le second élément de raccordement ne sont visibles pour un utilisateur faisant face à l'avant de l'écran d'affichage.

10. Système selon l'une quelconque des revendications précédentes, dans lequel le premier composant est disposé sur la surface arrière de l'écran d'affichage

11. Système selon la revendication 10, dans lequel le premier composant inclut une saillie qui est insérée dans un évidement (42 ou 66) du second élément de raccordement.

12. Système selon l'une quelconque des revendications précédentes, comportant de plus l'élément de support, l'élément de support incluant une partie parmi une partie d'un véhicule, une partie arrière d'un siège (92) et une paroi (96).
